# EUROPÄISCHE PATENTSCHRIFT

(11) **EP 2 270 457 B1**
(45) Veröffentlichungstag und Bekanntmachung des Hinweises auf die Patenterteilung: **08.02.2012**
(21) Anmeldenummer: 10188381.7
(22) Anmeldetag: 25.06.2002
(51) Int. Cl.: G01M 3/04, G01M 3/20

(54) **Schnüffellecksucher**
Leak sniffing probe
Détecteur de fuites

(30) Priorität: 13.07.2001 DE 10133567
(43) Veröffentlichungstag der Anmeldung: 05.01.2011
(62) Teilanmeldung aus: 02751070.0
(73) Patentinhaber: Inficon GmbH, 50968 Köln (DE)
(72) Erfinder: Böhm, Thomas, 50859, Köln (DE); Küster, Gerhard, 51109, Köln (DE); Liebich, Jörn, 51145, Köln (DE); Rolff, Randolf-Paul, 50169, Kerpen (DE)
(74) Vertreter: von Kreisler Selting Werner

(56) Entgegenhaltungen:
- DE-A- 3 247 975
- DE-A- 19 911 260
- GB-A- 2 072 852
- GB-A- 2 133 552
- US-A- 6 085 576
- US-B1- 6 179 444
- PATENT ABSTRACTS OF JAPAN Bd. 0112, Nr. 03 (P-591), 2. Juli 1987 (1987-07-02) & JP 62, 025229, A, (NIPPON OIL CO LTD), 3. Februar 1987 (1987-02-03)

## Beschreibung

Die Erfindung bezieht sich auf einen Schnüffellecksucher mit den Merkmalen des Oberbegriffs des Patentanspruchs 1.

Lecksucher mit Schnüffeleinrichtungen sind bekannt (vgl. z. B. DE-A-24 41 124 und DE-A-199 11 260). Bei der Schnüffellecksuche wird ein Testgas enthaltender Prüfling mit Hilfe einer Schnüffelspitze abgetastet.Ist ein Leck vorhanden, dringt Testgas nach außen. Dieses wird über die Schnüffelspitze einem Gasdetektor oder Gassensor zugeführt. Die vom Gasdetektor abgegebenen Signale dienen unter anderem der Erzeugung von Alarmsignalen, vorzugsweise akustisch. Als Testgas dient vielfach Helium. Als Testgas kann auch ein ohnehin im Prüfling vorhandenes Nutzgas verwendet werden, bei Kühleinrichtungen z. B. ein Halogengas.

Die US 6179444B1 offenbart eine Laser-Lichtquelle mit einem Linsenaufbau für den Einsatz in einem Scanner. Der Scanner kann handbetätigt sein. Zur Bedienungserleichterung sind Sensoren (Geräusch-, Gravitations- oder Beschleunigungssensor) offenbart, mit deren Hilfe Scan-Vorgänge initiiert werden. Im Zusammenhang mit einem Scanner, der mit einem Geräuschsensor ausgerüstet ist, wird als Anwendungsbeispiel ein Lecksuchgerät mit einer Sonde erwähnt. Der Abtastvorgang des Scanners wird dadurch initiiert, dass die Schnüffelspitze in die Näher einer Identifizierungskennzeichnung des Prüfobjekts gebracht wird.

Der vorliegenden Erfindung liegt die Aufgabe zu Grunde, einen Lecksucher der hier betroffenen Art sowie die damit ausführbaren Lecksuchverfahren in mehrfacher Hinsicht zu verbessern.

Bei einem Lecksucher der gattungsgemäßen Art wird diese Aufgabe durch die kennzeichnenden Merkmale des Patentanspruchs 1 gelöst. Der Beschleunigungssensor dient dazu, das Lecksuchgerät bei Nichtgebrauch in einen Stand-by-Zustand zu schalten und bei Gebrauch wieder zu "wecken".

Schnüffellecksucher müssen während ihres Betriebs nicht zwangsläufig über eine Tastatur bedient werden. Bisher erfolgte deshalb ihre Umschaltung in einen Stand-by-Zustand nur manuell. Diese Art der Umschaltung ist umständlich und wird vom Anwender entweder vergessen oder bewusst unterlassen. Durch die erfindungsgemäße Unterbringung eines Beschleunigungssensors in der Schnüffeleinrichtung, z. B. an der Verbindungsleitung oder vorzugsweise im Handstück, ist das Gerät selbst in der Lage zu erkennen, ob der Anwender eine Schnüffellecksuche durchführt oder das Handstück abgelegt hat. Bei abgelegtem Handstück schaltet sich das Gerät automatisch in den gewünschten Stand-by-Zustand. Die mit diesem Schaltzustand verbundenen Vorteile - Erhöhung der Standzeit, Energieersparnis usw. - können genutzt werden.

Besonders zweckmäßig ist, dass während des Stand-by nicht die Versorgungsspannung insgesamt sondern nur die Gasförderpumpe, mit deren Hilfe das Messgas angesaugt wird, abgeschaltet wird, wenn das Handstück längere Zeit nicht bewegt wird. Dadurch können die Standzeiten nicht nur der Pumpe sondern auch der verschmutzungsempfindlichen Nachweissensorik und der vom Messgas durchströmten Filter erhöht werden. Da die Sensorik und die Elektronik während des Stand-by nicht abgeschaltet sind, ist der Lecksucher sofort betriebsbereit, sobald das Handstück wieder bewegt wird.

Weitere Vorteile und Einzelheiten der Erfindung soll an Hand von in den Figuren dargestellten Ausführungsbeispielen erläutert werden.

Es zeigen:

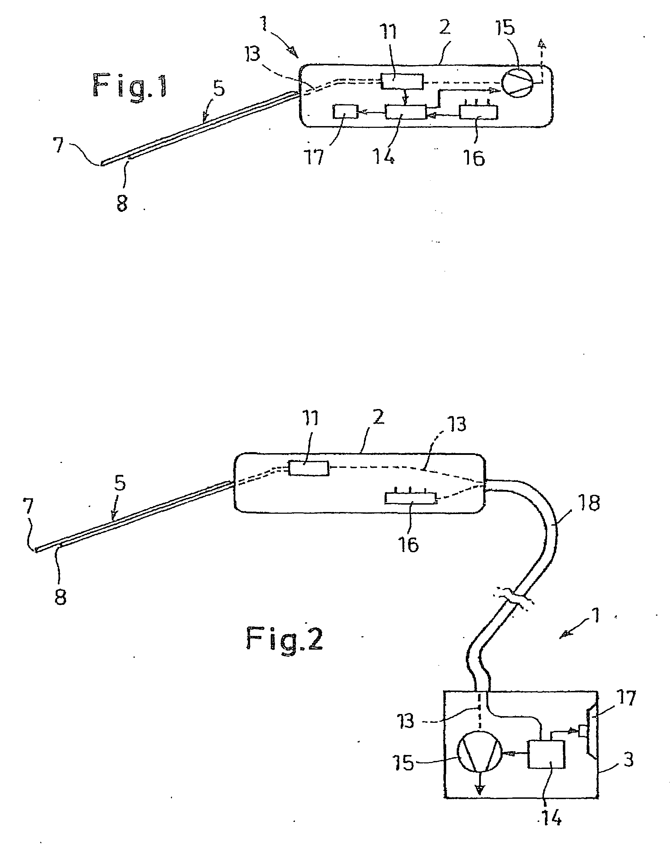

- Figuren 1 und 2: schematisch dargestellte Lecksucher der hier betroffenen Art.

In den Figuren 1 und 2 sind der Lecksucher mit 1 und das Handstück mit 2 bezeichnet. Das Handstück 2 trägt eine Schnüffelspitze 5. Diese besitzt zwei örtlich versetzte Gaseinlassöffnungen 7 und 8. Die Gaseinlassöffnung 7 befindet sich im vorderen Endbereich der Schnüffelspitze 5. Sie dient der Aufnahme von Messgas, das im Falle eines Lecks Testgas enthält. Über die Gaseinlassöffnung 8 wird Referenzgas aus der Umgebung des nicht dargestellten Prüflings aufgenommen, um Testgasuntergründe berücksichtigen zu können.

Die Lösungen nach den Figuren 1 und 2 unterscheiden sich darin, dass bei der Ausführung nach Figur 1 alle Bestandteile des Lecksuchers 1 im Handstück 2 selbst untergebracht sind, während bei der Ausführung nach Figur 2 ein Handstück 2 und ein davon separates Versorgungsgerät 3 vorgesehen sind.

Im Handstück 2 befindet sich der Gassensor 11. Das auf Testgas zu untersuchende Gas wird mit Hilfe einer Förderpumpe 15 angesaugt und dem Gassensor 11 zugeführt (gestrichelt dargestellte Leitungen 13). Bei der Lösung nach Figur 1 befindet sich die Förderpumpe 15 im Handstück 2, bei der Lösung nach Figur 2 im separaten Versorgungsgerät 3. Weiterhin befindet sich im Handstück 2 der Beschleunigungssensor 16. Er liefert seine Signale an eine zu einem Block zusammengefasste Versorgungs-, Mess- und Anzeige-Schaltung 14, die bei der Lösung nach Figur 1 im Handstück 2, bei der Lösung nach Figur 2 im Versorgungsgerät 3 untergebracht ist. Als Beispiel für eine Alarmanzeige ist ein Lautsprecher 17 dargestellt. Er erhält seine Signale vom Block 14 und kann ebenfalls im Handstück 2 (Figur 1) oder im Versorgungsgerät 3 (Figur 2) untergebracht sein.

Auch die Förderpumpe 15 steht bei beiden Ausführungen mit dem Block 14 in Verbindung. Über diese Verbindung kann die Förderpumpe abgeschaltet und damit der Lecksucher in den gewünschten Stand-by-Zustand geschaltet werden, wenn das Handstück abgelegt ist und der Beschleunigungssensor über eine vorgewählte Zeit keine Signale liefert.

Bei der Lösung nach Figur 2 sind Handstück 2 und Versorgungsgerät 3 über eine Leitung 18 miteinander verbunden. Je nach Verteilung der einzelnen Bauteile im Handstück 2 und im Versorgungsgerät 3 umfasst die Leitung 18 elektrische und/oder gasführende Leitungen.

## Patentansprüche

1. Schnüffellecksucher (1) mit einem eine Schnüffelspitze (5) tragenden Handstück (2) und einem bewegungsempfindlichen Gassensor (11), z.B. Infrarotsensor oder pyroelektrischen Sensor, und mit einer Förderpumpe (15) für die von der Schnüffelspitze (5) angesaugten Gase,
**dadurch gekennzeichnet, dass**
ein Bewegungen des Handstückes (2) registrierender Beschleunigungssensor (16) vorgesehen ist, dessen Signale nach einer vorgegebenen Zeit der Nichtbenutzung des Handstücks den Schnüffellecksucher in einen Stand-by-Zustand schalten, in dem die Förderpumpe (15) abgeschaltet ist.

2. Schnüffellecksucher (1) nach Anspruch 1, **dadurch gekennzeichnet, dass** der Beschleunigungssensor (16) mindestens in Bezug auf zwei Achsen bewegungsempfindlich ist.

3. Schnüffellecksucher (1) nach Anspruch 1 oder 2, **dadurch gekennzeichnet, dass** sich die Förderpumpe (15) im Handstück (2) befindet.

4. Schnüffellecksucher (1) nach Anspruch 1 oder 2, **dadurch gekennzeichnet, dass** ein vom Handstück (2) getrenntes Versorgungsgerät (3) vorgesehen ist, dass das Handstück (2) und das Versorgungsgerät (3) über eine Leitung (18) miteinander verbunden sind, und dass sich der Beschleunigungssensor (16) im Handstück (2) befindet oder in der Nähe des Handstücks (2) an der Verbindungsleitung (18) befestigt ist.

5. Schnüffellecksucher (1) nach einem der Ansprüche 1 bis 4, **dadurch gekennzeichnet, dass** für die Zeit, in der der Beschleunigungssensor (16) Signale liefert, ein in der Messsignalleitung befindlicher Schalter, der betätigt wird, der für diesen Zeitabschnitt auf einen Generator für ein dem Messsignal nachgebildetes Signal umgeschaltet wird.

6. Schnüffellecksucher (1) nach einem der vorhergehenden Ansprüche, **dadurch gekennzeichnet, dass** zur Durchführung der Schaltvorgänge Schaltmittel vorgesehen sind, die zumindest teilweise aus einem Microcomputer mit geeigneter Software bestehen.

## Claims

1. A sniffing leak detector (1) comprising a handpiece (2) supporting a sniffing tip (5), and a gas sensor (11) being sensitive to movements, said gas sensor being e.g. an infrared sensor and a pyroelectric sensor, and comprising a supply pump (15) for the gases being sucked in by the sniffing tip (5),
**characterized in that**
an acceleration sensor (16) is provided for recording movements of the handpiece (2), wherein, after a predetermined period of non-use of the handpiece, the signals of the acceleration sensor will switch the sniffing leak detector into a standby state in which the supply pump (15) is switched off.

2. The sniffing leak detector (1) according to claim 1, **characterized in that** the acceleration sensor (16) is sensitive to movements with respect to at least two axes.

3. The sniffing leak detector (1) according to claim 1 or 2, **characterized in that** the supply pump (15) is located within the handpiece (2).

4. The sniffing leak detector (1) according to claim 1 or 2, **characterized in that** a supply device (3) separated from the handpiece (2) is provided, that the handpiece (2) and the supply device (3) are connected to each other by a line (18) and that the acceleration sensor (16) is located within the handpiece (2) or in the vicinity of the handpiece (2) attached to the connection line (18).

5. The sniffing leak detector (1) according to any one of claims 1 to 4, **characterized in that** for the period during which the acceleration sensor (16) supplies signals, a switch arranged in the measurement signal line is actuated which for this period of time switches over to a generator providing a signal simulating the measurement signal.

6. A leak detector (1) according to any one of the preceding claims, **characterized in that** switching means are provided to perform the switching operations, said switching means consisting at least partially of a microcomputer having suitable software.

## Revendications

1. Détecteur de fuites par reniflage (1) comprenant une pièce à main (2) supportant une pointe de reniflage (5) et un capteur de gaz (11) sensible aux mouvements, par exemple un capteur infrarouge ou un capteur pyroélectrique, et une pompe d'alimentation (15) pour les gaz aspirés par la pointe de reniflage (5),
**caractérisé en ce qu'**un capteur d'accélération (16) enregistrant les mouvements de la pièce à main (2) est prévu, capteur dont les signaux après une durée prédéterminée de non-utilisation font passer le détecteur de fuites par reniflage en état de veille, état dans lequel la pompe d'alimentation (15) est arrêtée.

2. Détecteur de fuites par reniflage (1) selon la revendication 1, **caractérisé en ce que** le capteur d'accélération (16) est sensible aux mouvements au moins en ce qui concerne deux axes.

3. Détecteur de fuites par reniflage (1) selon la revendication 1 ou 2, **caractérisé en ce que** la pompe d'alimentation (15) se trouve dans la pièce à main (2).

4. Détecteur de fuites par reniflage (1) selon la revendication 1 ou 2, **caractérisé en ce qu'**un appareil d'alimentation (3) séparé de la pièce à main (2) est prévu, **en ce que** la pièce à main (2) et l'appareil d'alimentation (3) sont reliés ensemble par l'intermédiaire d'une ligne (18) et **en ce que** le capteur d'accélération (16) se trouve dans la pièce à main (2) ou est fixé à proximité de la pièce à main (2) à la ligne de raccordement (18).

5. Détecteur de fuites par reniflage (1) selon l'une des revendications 1 à 4, **caractérisé en ce que** pour la durée pendant laquelle le capteur d'accélération (16) émet des signaux, un commutateur se trouvant dans la ligne de signal de mesure, qui est actionné, est commuté pendant cet intervalle de temps sur un générateur pour un signal imitant le signal de mesure.

6. Détecteur de fuites par reniflage (1) selon l'une des revendications précédentes, **caractérisé en ce que** des moyens de commutation sont prévus pour mettre en oeuvre les opérations de commutation, lesquels moyens se composent au moins partiellement d'un micro-ordinateur comprenant le logiciel approprié.
